# EUROPÄISCHE PATENTSCHRIFT

(11) **EP 1 038 123 B1**
(45) Veröffentlichungstag und Bekanntmachung des Hinweises auf die Patenterteilung: **31.10.2001**
(21) Anmeldenummer: 98964502.3
(22) Anmeldetag: 12.12.1998
(51) Int. Cl.: F16H 1/28, F16H 1/46

(54) **PLANETENGETRIEBE**
PLANETARY GEAR
ENGRENAGE PLANETAIRE

(30) Priorität: 20.12.1997 DE 19756967
(43) Veröffentlichungstag der Anmeldung: 27.09.2000
(73) Patentinhaber: ZF FRIEDRICHSHAFEN Aktiengesellschaft, 88038 Friedrichshafen (DE)
(72) Erfinder: SCHULZ, Horst, D-88045 Friedrichshafen (DE)
(86) Internationale Anmeldenummer: EP9808115
(87) Internationale Veröffentlichungsnummer: WO9932800

(56) Entgegenhaltungen:
- DE-A- 4 325 295
- DE-A- 19 525 831
- DE-A- 19 603 004
- US-A- 5 242 336

## Beschreibung

Die Erfindung betrifft ein Planetengetriebe nach dem Oberbegriff von Anspruch 1.

Planetengetriebe dieser Art sind allgemein bekannt. In der Regel sind mehrere Planetenräder auf den Umfang verteilt. Sie haben zwei Verzahnungsbereiche, die im ständigen Zahneingriff mit den beiden Hohlrädern stehen. Die Planetenräder bilden mit den Hohlrädern ein sogenanntes Wolfrom-Koppelgetriebe. Das Drehzahlverhältnis des Planetenträgers zu dem für den Abtrieb vorgesehenen Hohlrad wird dabei als Wolfrom-Übersetzung bezeichnet. In der Regel greift ein Sonnenrad direkt in einen Verzahnungsbereich der Planetenräder ein und bildet mit diesen und dem feststehenden Hohlrad eine Vorübersetzung. Die Wolfrom-Übersetzung multipliziert mit der Vorübersetzung ergibt die Gesamtübersetzung des Planetengetriebes. Die Vorübersetzung kann durch eine Getriebestufe zwischen dem Sonnenrad und den Planetenrädern erweitert sein (DE 196 03 004 A1). Durch eine größere Vorübersetzung ist es möglich, bei gleicher Gesamtübersetzung die Wolfrom-Übersetzung kleiner zu halten. Bei einer kleineren Wolfrom-Übersetzung kann die Differenz der Zähnezahlen der beiden Hohlräder größer gewählt werden. Eine größere Zähnezahldifferenz ermöglicht, mehr Planeten zu montieren, wodurch die Übertragungsdichte, das Verhältnis von übertragbarer Leistung zum Bauvolumen, zunimmt.

Derartige Planetengetriebe mit extrem hohen Übersetzungen von i = 170 und noch höher, werden in der Robotertechnik angewendet, um die Leistung kleiner, schnell laufender Antriebsmotoren mit leichten, klein bauenden Übertragungsmitteln zu übertragen und dann in große Drehmomente und Kräfte umzuwandeln. Dabei werden höchste Ansprüche an die Getriebe gestellt. Da sie häufig in oder an Tragarmen oder sonstigen bewegten Bauteilen angeordnet sind, sollen sie selbst sehr leicht sein und wenig Bauraum beanspruchen. Kompakte Bauweise mit einer hohen Übertragungsdichte begünstigt das dynamische Verhalten bei schnellen Bewegungen und Lastrichtungswechseln. Kleine Massen und geringe Massenträgheitsmomente erlauben große Beschleunigungen mit kleinen Antriebsleistungen und führen beim Abbremsen zu relativ geringen Erwärmungen. Dadurch und durch einen guten Wirkungsgrad mit einer geringen Wärmeentwicklung erreicht der Roboter schon nach kurzer Zeit seine niedrige, konstante Betriebstemperatur, die eine zuverlässige, präzise Betriebsweise während der gesamten Betriebszeit garantiert. Ausschlaggebend für den Wirkungsgrad und die Wärmeentwicklung ist die innere Wälzleistung, die von den Eingriffsverhältnissen und Belastungen der Zahnräder abhängt und zusammen mit dem Spiel und der Reibung den Verschleiß und das Geräusch beeinflußt. Um Hysterese und Stöße beim Lastwechsel zu vermeiden, sollte das Verdrehspiel einstellbar sein, so daß annähernd spielfrei ohne Verspannung der Antriebselemente die Leistung übertragen wird. Die Spielfreiheit bewirkt neben einer hohen Steifigkeit, daß Schwingungen und Vibrationen vermieden werden und eine große Laufruhe erzielt wird. Je besser diese Voraussetzungen erfüllt werden, desto präziser und schneller können Positionen und Bewegungen mit einer großen Wiederhohlgenauigkeit angefahren werden.

Aus der DE 195 25 831 A1 ist ein gattungsgemässes Planetengetriebe für den Einsatz in Industrierobotern bekannt. Es ist als Wolfrom-Getriebe ausgebildet und besitzt somit zwei nebeneinander angeordnete Hohlräder, von denen eins mit dem Gehäuse fest verbunden ist, während das andere über ein Kreuzrollenlager drehbar gelagert ist. Die beiden Hohlräder, die eine geringfügig unterschiedliche Zähnezahl haben, kämmen mit mehreren, auf den Umfang verteilten Stufenplanetenrädern. Die beiden Verzahnungsbereiche des Stufenplaneten sowie die Verzahnungen der zugeordneten Hohlräder sind konisch ausgebildet, d.h. die Mantelflächen der Verzahnungen sind zur Rotationsachse geneigt, und zwar in entgegengesetzter Richtung, damit sich die auftretenden Axialkräfte im Stufenplaneten ausgleichen können und keine besonderen Axiallager erfordern. Aus Fertigungsgründen sind die Neigungswinkel der konischen Verzahnungen so gewählt, daß die größeren Durchmesser der Verzahnungsbereiche benachbart sind.

Der Verzahnungsbereich des Stufenplanetenrads, der mit dem feststehenden Hohlrad kämmt, greift in die Verzahnung eines Sonnenrades ein, das auf einer Antriebswelle sitzt und ebenfalls konisch ausgeführt ist. Durch die konische Ausgestaltung der Stufenplaneten zentrieren sich diese spielfrei in den Verzahnungen, so daß zum Planetenträger hin axial ein großes Spiel vorgesehen sein kann, was die Montage erleichtert. Ferner können sie sich auch bei veränderten Betriebsbedingungen auf eine ideale Lastverteilung einstellen.

Die Verzahnungsbereiche des Stufenplanetenrads sind axial durch eine verzahnungsfreie Zwischenzone voneinander getrennt und weisen zueinander einen radialen Versatz auf. Solche Planeten mit getrennt herzustellenden Verzahnungsbereichen sind im Hinblick auf die erforderliche Präzision und Steifigkeit meist nur mit einem erhöhten Aufwand und schwierig herzustellen.

Der Erfindung liegt daher die Aufgabe zugrunde, unter Berücksichtigung der unterschiedlichen Eingriffsverhältnisse in beiden Hohlrädern die Herstellung der Planetenräder zu vereinfachen. Weitere Ausgestaltungen ergeben sich aus den Unteransprüchen.

Nach der Erfindung weisen die Verzahnungen der beiden Hohlräder und die Verzahnungsbereiche des Planetenrads einen gleichen Modul auf. Ferner sind die Verzahnungsbereiche so aufeinander abgestimmt, daß die Verzahnungen der Planetenräder ohne Versatz ineinander übergehen. Dies läßt sich durch eine geeignete Profilverschiebung erzielen. Da die angrenzenden Endbereiche der Verzahnungsbereiche des Planetenrads mit einem Knick, jedoch ohne Absatz ineinander übergehen, können sie mit hoher Präzision einfacher hergestellt werden.

In der Regel sind die Planetenachsen, wie bekannt, parallel zur Getriebehauptachse angeordnet. Insbesondere bei Planetengetrieben, bei denen die Zähnezahldifferenzen zwischen den Hohlrädern größer drei ist, kann es zweckmäßig sein, die Planetenachsen zur Antriebsachse so zu neigen, daß das Hohlrad mit der größeren Zähnezahl einen größeren Achsabstand erhält. Die Neigung der Planetenachsen trägt dazu bei, daß die Unterschiede in den Betriebseingriffswinkeln der beiden Hohlradeingriffe gemildert werden. An sich sind geneigte Planetenradachsen in Verbindung mit zylindrischen Planetenrädern aus der DE 4 325 295 A1 bekannt. Sie werden dort verwendet, um das Spiel einzustellen.

Dadurch, daß die Verzahnungen des Planetenrades ohne Versatz ineinander übergehen, sind die Zähne sehr stabil und tragfähig, so daß die Verzahnungsbereiche in der axialen Erstreckung reduziert werden können, wodurch das gesamte Getriebe kürzer, steifer und vibrationsärmer wird. Dabei ist es zweckmäßig, den Verzahnungsbereich des Planetenrads, der dem Hohlrad mit der größeren Zähnezahl zugeordnet ist, deutlich breiter zu wählen, als den anderen Verzahnungsbereich, so daß er besser den unterschiedlichen Belastungen und Eingriffsverhältnissen angepaßt ist. Die Verzahnungsbereiche des Planetenrads sind deutlich asymmetrisch gestaltet, um durch die unterschiedlichen Verzahnungsbreiten und Konusneigungswinkel unterschiedliche, mittlere Verzahnungsdurchmesser der beiden Verzahnungsbereiche entsprechend den unterschiedlichen, zugeordneten Wälzradien zu erzielen.

Um die axiale Breite des Verzahnungsbereichs des Planetenrads, das dem Hohlrad mit der größeren Zähnezahl zugeordnet ist, zu vergrößern, ist es zweckmäßig, die Grenzebene zwischen den Verzahnungsbereichen zum Hohlrad mit der kleineren Zähnezahl zu verschieben. Somit kann bei gleicher Baulänge der Freiraum zwischen den Hohlrädern genutzt werden, um den einen Verzahnungsbereich des Planetenrads zu verbreitern.

Vorteilhaft ist es, wenn die Stufenplaneten schräg verzahnt sind. Die Schrägverzahnung soll vorzugsweise einen gleichen Richtungssinn und etwa gleiche Steigungsmaße aufweisen. Ferner kann die Wolfrom-Übersetzung reduziert werden, wenn das Sonnenrad das Planetenrad über eine Zwischenstufe antreibt, die zweckmäßigerweise als Kegelradstufe ausgebildet ist.

In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

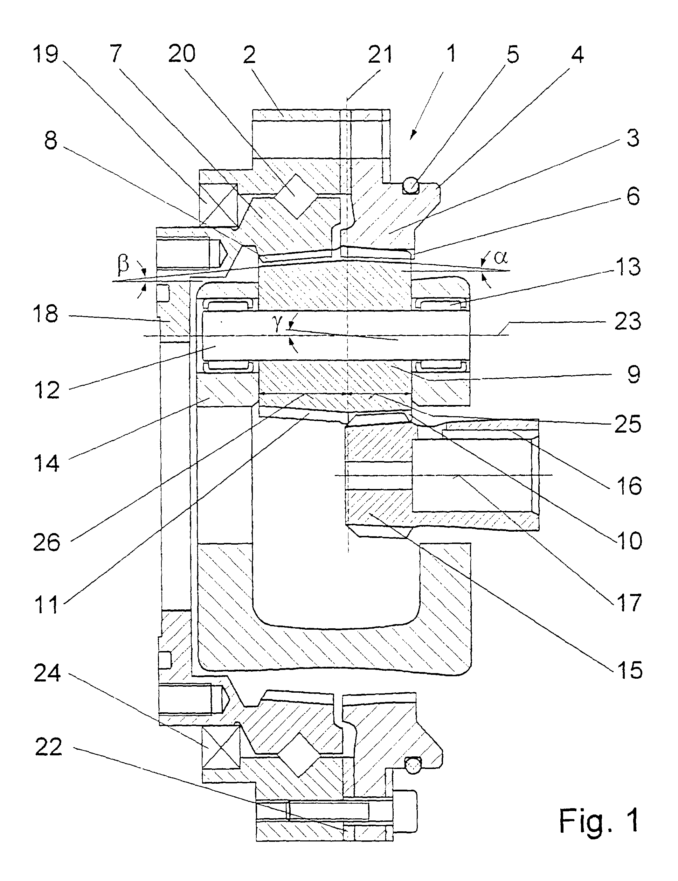

- Fig. 1: zeigt einen Längsschnitt durch ein erfindungsgemäßes Planetengetriebe.

Ein Planetengetriebe 1 besitzt eine Wolfrom-Übersetzung, bestehend aus einem ersten Hohlrad 3, das fest mit einem Gehäuse 2 verbunden ist, und einem zweiten, drehbaren Hohlrad 7, das im Gehäuse 2 über ein Kreuzrollenlager 20 drehbar gelagert ist. Mit den beiden Hohirädern 3 und 7 kämmt mindestens ein Planetenrad 9, das einen ersten Verzahnungsbereich 10 hat, der einer Verzahnung 6 des ersten Hohlrads 3 zugeordnet ist, während ein zweiter Verzahnungsbereich 11 des Planetenrads 9 in eine Verzahnung 8 des zweiten Hohlrads 7 eingreift. Obwohl für die Funktion nur ein Planetenrad erforderlich ist, werden in der Regel mehrere, auf den Umfang verteilte Planetenräder angewendet. Die Anzahl der Planetenräder, die montiert werden können, sind abhängig von der Differenz der Zähnezahlen der beiden Hohlräder 3 und 7, und zwar können mit einer zunehmenden Zähnezahldifferenz mehr Planeten montiert werden. Die höhere Planetenräderzahl ergibt jedoch eine gute Übertragungsdichte.

Das Planetenrad 9 kämmt mit seinem Verzahnungsbereich 10 mit einem Sonnenrad 15 auf einer Antriebswelle 16. Zur Abnahme der Leistung besitzt das zweite Hohlrad 7 einen Abtriebsflansch 18, der gegenüber dem Gehäuse 2 durch eine Dichtung 24 abgedichtet ist. Die Planetenräder 9 sind auf einem Lagerbolzen 12 mit Wälzlagern 13 in einem frei umlaufenden Planetenträger 14 gelagert. Der Planetenträger 14 hat zu dem Planetenrad 9 axiales Spiel und wird durch die Verzahnungsbereiche 10 und 11 sowie die Verzahnungen 6 und 8 der Hohlräder 3 und 7 zentriert. Die Verzahnungen 6, 8, 10, 11 sind zu diesem Zweck konisch ausgebildet, wobei die Konusneigungswinkel α und β gegensinnig sind, so daß sich die axialen Kräfte im Planetenrad 9 ausgleichen und keine Axiallager erfordern.

Die beiden Verzahnungsbereiche 10, 11 des Planetenrads 9 und die Verzahnungen 6, 8 der beiden Hohlräder 3, 7 haben einen gleichen Modul. Ferner haben die Verzahnungsbereiche 10, 11 eine gleiche Zähnezahl. Sie sind so aufeinander abgestimmt, daß sie ohne Versatz ineinander übergehen. Durch eine geeignete Profilverschiebung können die effektiven Flankendurchmesser so aufeinander abgestimmt werden, daß die Verzahnungsbereiche 10, 11 im Bereich einer Grenzebenen 21 mit einem Knick, jedoch ohne einen Versatz, ineinander übergehen. Dadurch wird die Fertigung vereinfacht und die Stabilität der Zähne verbessert. Durch die ineinander übergehenden Verzahnungsbereiche 10, 11 können auch die Hohlräder 3, 7 einen sehr geringen axialen Abstand haben, wodurch sich die Baulänge und das Gewicht verringern und die Steifigkeit des Antriebs zunimmt.

Durch die erfindungsgemäße Gestaltung sind allerdings Kompromisse bei den Eingriffsverhältnissen in Kauf zu nehmen, zumal wenn die Wolfrom-Übersetzung kleiner gehalten werden soll, was eine wählbare größere Zähnezahldifferenz der Hohlräder 3 und 7 bedeutet. Um die Eingriffsverhältnisse zu verbessern und die Unterschiede in den Betriebseingriffswinkeln der Hohlradeingriffe zu mildern, ist der Konusneigungswinkel β an dem Hohlrad 7 mit der größeren Zähnezahl größer als der Konusneigungswinkel α an dem anderen Hohlrad 3. Ferner ist die Breite 26 des Verzahnungsbereichs 11 deutlich größer als die Breite 25 des Verzahnungsbereichs 10. Dies wird unter anderem dadurch erreicht, daß die Grenzebene 21 zwischen den Verzahnungsbereichen 10, 11 zum Hohlrad 3 mit der kleineren Zähnezahl verschoben ist, so daß der Freiraum zwischen den Hohlrädern 3, 7 für die Verbreiterung des Verzahnungsbereichs 11 genutzt wird. Durch beide Maßnahmen, durch die unterschiedliche Verzahnungsbreiten 25, 26 und die unterschiedlichen Konusneigungswinkel α und β, entstehen unterschiedliche mittlere Verzahnungsdurchmesser der beiden Verzahnungsbereiche in Anpassung an die zugeordneten Wälzradien. Ferner kann die Planetenradachse 23 zur Antriebsachse 17 um einen Neigungswinkel γ geneigt sein, so daß das Hohlrad 7 mit der größeren Zähnezahl einen größeren Achsabstand erhält. Die geneigte Planetenradachse 23 trägt dazu bei, die Unterschiede in den Betriebseingriffswinkeln der beiden Hohlradeingriffe zu mildern.

Zwischen dem feststehenden Hohlrad 3 und dem Gehäuse 2 ist eine Distanzscheibe 22, durch deren Dicke das Spiel in der Verzahnung eingestellt werden kann. Das Hohlrad 3 weist ferner einen Zentrierbund 4 auf, der zur Aufnahme eines nicht näher dargestellten Gehäuseteils dient und in den ein Dichtring 5 eingelassen ist.

### Bezugszeichen

- 1: Planetengetriebe
- 2: Gehäuse
- 3: feststehendes Hohlrad
- 4: Zentrierbund
- 5: Dichtung
- 6: Verzahnung (1. Hohlrad)
- 7: drehbares Hohlrad
- 8: Verzahnung (2. Hohlrad)
- 9: Planetenrad
- 10: erster Verzahnungsbereich
- 11: zweiter Verzahnungsbereich
- 12: Lagerbolzen
- 13: Wälzlager
- 14: Planetenträger
- 15: Sonnenrad
- 16: Antriebswelle
- 17: Antriebsachse
- 18: Abtriebsflansch
- 19: Dichtung
- 20: Kreuzrollenlager
- 21: Grenzebene
- 22: Distanzscheibe
- 23: Planetenradachse
- 24: Dichtung
- 25: Breite
- 26: Breite
- α: Konusneigungswinkel
- β: Konusneigungswinkel
- γ: Neigungswinkel

## Patentansprüche

1. Planetengetriebe (1) mit einem ersten, feststehenden Hohlrad (3), mit einem zweiten, benachbarten, drehbar gelagerten Hohlrad (7), die beide zur Antriebsachse (17) entgegengesetzt leicht konisch ausgebildete Verzahnungen (6, 8) mit geringfügig unterschiedlichen Zähnezahlen aufweisen, und mit mindestens einem Planetenrad (9), das von einem Sonnenrad (15) angetrieben wird und zwei entsprechend den Hohlrädern (3, 7) konisch ausgebildete Verzahnungsbereiche (10, 11) aufweist, die jeweils in die Verzahnung (6, 8) eines der Hohlräder (3, 7) eingreifen und untereinander eine gleiche Zähnezahl aufweisen, **dadurch gekennzeichnet, daß** die Verzahnungen (6, 8) der beiden Hohlräder (3, 7) und die Verzahnungsbereiche (10, 11) des Planetenrads (9) einen gleichen Modul aufweisen und daß die Verzahnungsbereiche (10, 11) so aufeinander abgestimmt sind, daß die Verzahnungsbereiche (10, 11) ohne Versatz ineinander übergehen.

2. Planetengetriebe (1) nach Anspruch 1, **dadurch gekennzeichnet, daß** die Planetenradachse (23) zur Antriebsachse (17) um einen Neigungswinkel (γ) geneigt ist, so daß das Hohlrad (3, 7) mit der größeren Zähnezahl einen größeren Achsabstand erhält.

3. Planetengetriebe (1) nach Anspruch 1 oder 2, **dadurch gekennzeichnet, daß** an dem Hohlrad (7) mit der höheren Zähnezahl ein größerer Konusneigungswinkel (β) vorhanden ist als an dem anderen Hohlrad (3).

4. Planetengetriebe (1) nach einem der vorhergehenden Ansprüche, **dadurch gekennzeichnet, daß** der Verzahnungsbereich (11) des Planetenrads (9), der dem Hohlrad (7) mit der größeren Zähnezahl zugeordnet ist, deutlich breiter ist als der andere Verzahnungsbereich (10).

5. Planetengetriebe (1) nach einem der vorhergehenden Ansprüche, **dadurch gekennzeichnet, daß** die Grenzebene (21) zwischen den Verzahnungsbereichen (10, 11) zum Hohlrad (3) mit der kleineren Zähnezahl verschoben ist.

6. Planetengetriebe (1) nach einem der vorhergehenden Ansprüche, **dadurch gekennzeichnet, daß** die Verzahnungsbereiche (10, 11) schräg verzahnt sind.

7. Planetengetriebe (1) nach einem der vorhergehenden Ansprüche, **dadurch gekennzeichnet, daß** das Sonnenrad (15) das Planetenrad (9) über eine Zwischenstufe antreibt.

8. Planetengetriebe (1) nach Anspruch 7, **dadurch gekennzeichnet, daß** die Zwischenstufe eine Kegelradstufe ist.

## Claims

1. A planetary gear (1) with a first fixed ring gear (3) and a second, adjacent rotationally mounted ring gear (7), with both ring gears having slightly conical toothing (6,8) with slightly different numbers of teeth located opposite the drive axle (17). The planetary gear also comprises at least one planetary wheel (9) driven by a sun wheel (15) and having two conical toothed areas (10,11) corresponding to the two ring gears (3,7). Said areas engage with the toothing (6,8) of one of the ring gears (3,7), both having the same number of teeth,
**characterized**
**in that** the toothing (6,8) of both ring gears (3,7) and the toothed areas (10,11) of the planetary wheel (9) have the same module and that the toothed areas (10,11) match each other in such a way that a smooth transition occurs between the toothed areas (10, 11).

2. A planetary gear (1) according to claim 1,
**characterized**
**in that** the planetary wheel axis (23) forms an angle of inclination (γ) in relation to the drive axle (17) resulting in the ring gear (3,7) with the higher number of teeth having a larger axle distance.

3. A planetary gear (1) according to claim 1 or 2,
**characterized**
**in that** the ring gear (7) with the higher number of teeth shows a larger angle of inclination (β) of the cone than the other ring gear (3).

4. A planetary gear (1) according to any of the preceding claims,
**characterized**
**in that** the toothed area (11) of the planetary wheel (9), which is assigned to the ring gear (7) with the higher number of teeth , is clearly broader than the other toothed area (10).

5. A planetary gear (1) according to any of the preceding claims,
**characterized**
**in that** the boundary surface (21) between the toothed areas (10, 11) is displaced toward the ring gear (3) with the smaller number of teeth.

6. A planetary gear (1) according to any of the preceding claims,
**characterized**
**in that** the toothed areas (10,11) are helical-cut.

7. A planetary gear (1) according to any of the preceding claims,
**characterized**
**in that** the sun wheel (15) drives the planetary wheel (9) via an intermediate stage.

8. A planetary gear (1) according to claim 7,
**characterized**
**in that** the intermediate stage is a bevel gear stage.

## Revendications

1. Boîte planétaire (1) dotée d'une première couronne fixe (3), et d'une deuxième couronne adjacente et pivotante (7), comportant toutes deux des dentures légèrement coniques (6, 8) avec un nombre de dents légèrement différent et orientées en sens opposé au pont moteur, et dotée d'au moins un satellite (9), qui est entraîné par un planétaire (15) et qui comporte deux zones de denture coniques (10, 11), correspondant aux deux couronnes, qui engrènent respectivement dans la denture (6, 8) d'une des couronnes (3, 7) et qui comportent un nombre de dents identique, **caractérisée en ce que** les dentures (6, 8) des deux couronnes (3, 7) et les zones de denture (10, 11) du planétaire (9) comportent un module identique et **en ce que** les zones de denture (10, 11) soient adaptées, l'une par rapport à l'autre, de façon à ce qu'il n'y ait pas de décalage au niveau de la transition des deux zones de denture (10, 11).

2. Boîte planétaire (1), d'après la revendication 1, **caractérisée en ce que** l'axe de satellite (23) est incliné par rapport au pont moteur d'un angle d'inclinaison (Y), de façon à ce que la couronne (3, 7) ayant un plus grand nombre de dents ait un plus grand entr'axe.

3. Boîte planétaire (1), d'après les revendications 1 ou 2, **caractérisée en ce que** la couronne (7) ayant le plus grand nombre de dents ait le plus grand angle d'inclinaison conique (β) que la deuxième couronne (3).

4. Boîte planétaire (1), d'après l'une des revendications précédentes, **caractérisée en ce que** la zone de denture (11) du satellite (9), associée à la couronne (7) ayant un plus grand nombre de dents, soit nettement plus large que l'autre zone de denture (10).

5. Boîte planétaire (1), d'après l'une des revendications précédentes, **caractérisée en ce que** le plan d'interface (21) entre les zones de denture (10, 11) est décalé vers la couronne (3) qui comporte un plus petit nombre de dents (3).

6. Boîte planétaire (1), d'après l'une des revendications précédentes, **caractérisée en ce que** les zones (10, 11) comportent une denture hélicoïdale.

7. Boîte planétaire (1), d'après l'une des revendications précédentes, **caractérisée en ce que** le planétaire (15) entraîne le satellite par un étage intermédiaire.

8. Boîte planétaire (1), d'après la revendication 7, **caractérisée en ce que** l'étage intermédiaire soit un étage à pignons coniques.
